# EUROPEAN PATENT APPLICATION

(11) **EP 1 571 169 A1**
(43) Date of publication of application: **07.09.2005**
(21) Application number: 04251269.9
(22) Date of filing: 04.03.2004
(51) Int. Cl.: C08G 18/76, C08G 18/48, C08K 5/11

(54) **Composition for forming rigid polyurethane foam and method of preparing rigid polyurethane foam with said composition**

(71) Applicant: NIPPON POLYURETHANE INDUSTRY CO. LTD., Tokyo (JP)
(72) Inventor: Murayama, Satoshi, Yokohama-shi Kanagawa-ken (JP); Kimura, Tadashi, Yokohama-shi Kanagawa-ken (JP); Fukuda, Kenji, Yokohama-shi Kanagawa-ken (JP)
(74) Representative: Paget, Hugh Charles Edward

(57) **Abstract**

A composition for forming a rigid polyurethane foam, characterized in that a composition comprising an organic polyisocyanate, a polyol, a catalyst, a foam stabilizer, water ,and if necessary, a hydrochlorofluorocarbon, as a foaming agent, a low molecular weight compound (a) having an unsaturated bond and carbonyl group which are adjacent to each other in an amount of 0.01 to 20 parts by weight per 100 parts by weight of said polyol, as a modifying agent, and if necessary, other auxiliary agent (s). The use of a low molecular weight compound having an unsaturated bond and carbonyl group which are adjacent to each other, as a modifying agent could remarkably improve the brittleness and adhesive properties of a rigid polyurethane foam which was foamed with water, or with water and an HFC, without affecting the reactivity or dimensional stability of the polyurethane foam.

## Description

### BACKGROUND OF THE INVENTION

### (1) FIELD OF THE INVENTION

The present invention relates to a composition for forming a rigid polyurethane foam, and a method of preparing the same, more particularly to a composition for forming a rigid polyurethane foam with brittleness improved, with excellent adhesive properties to a face material, wherein water, or a mixture of water and a flon is used as a foaming agent, and a method of preparing the same.

### (2) RELATED PRIOR ART

Conventionally, as a method of preparing a rigid polyurethane foam, a method in which a chlorine-containing flon, for example, a CFC or an HCFC, such as CFC-11, HCFC-141b, HCFC-123, HCFC-22 or CFC-12, is used as a foaming agent, is publicly known. However, a CFC and an HCFC are said to be one of the causes of the environmental problem of the depletion of the ozone layer, and therefore a reduction and abolition of a CFC and an HCFC are to be put into force. Thus foaming with water has got attention, wherein carbon dioxide generated by the reaction between water and isocyanate group is utilized. Furthermore, foaming with a hydrofluorocarbon (which is hereinafter referred to as HFC), which is one of flons and will not deplete the ozone layer due to containing no chlorine, has got attention.

With respect to a method of preparing a rigid polyurethane foam wherein merely water is used as a foaming agent, various suggestions have been offered heretofore. For example, a method which comprises using a polyol having a hydroxyl value of 300 to 450 (mg KOH/g), which is prepared by adding an alkylene oxide to a mixture of 40 to 70 parts by weight of pentaerythritol, 10 to 50 parts by weight of triethanolamine, and 40 parts by weight or less of glycerin (for example, refer to JP-A-5-186559); a method which comprises using a compound having aromatic amino group and/or imino group, wherein said mixture is used as an initiator for said polyol (for example, refer to JP-A-9-87352); a method which comprises using a polyol mixture of 65 to 85% by weight of a polyol having a hydroxyl value of 270 to 330, and 15 to 35% by weight of a polyol having a hydroxyl value of 400 to 460, in combination with a poly(alkylene glycol)-silicone block-copolymer having a particular structure of molecule as a foam stabilizer, wherein the former polyol is derived by adding ethylene oxide (EO) and propylene oxide (PO) to tolylenediamine, while the latter polyol is derived by adding PO to methyl glucoside (for example, refer to JP-A-5-97961); a method which comprises using a large amount of a high boiling compound such as phthalate, dibasic fatty ester, or orthophosphoric ester, as a viscosity reducing agent (for example, refer to JP-A-6-184340); a method which comprises using a polyol mixture as a polyol component, and a particular silicone foam-stabilizer as a foam stabilizer, wherein said compound comprises a tolylenediamine short-chain polyether polyol, an ethylenediamine short-chain polyether polyol, a glycerin long-chain polyether polyol, and dipropylene glycol in a particular ratio, while said foam-stabilizer is specified by the average molecular weight, the concentration of silicone in the molecule, and the ratio of EO/PO (for example, refer to JP-A-10-45862); a method which comprises using a polyol which is derived by adding an alkylene oxide to a saccharide in the presence of a catalyst and a solvent (for example, refer to JP-A-10-101762); and a method which comprises using an aromatic polyester-polyol which is derived from a terephthalic-acid component and a high-molecular-weight polyol, in an amount of 5% by weight of a polyol as a polyol component (for example, refer to JP-A-10-231345); are proposed.

However, when in order to prepare a rigid polyurethane foam, merely water is used as a foaming agent, and a polyether polyol as derived by using propylene glycol, trimethylolpropane, glycerin, ethylenediamine, tolylenediamine, pentaerythritol, methyl glucoside, sorbitol, sucrose or the like as an initiator, is used as a polyol, or when in order to prepare a rigid polyurethane foam, merely water is used as a foaming agent, and a polyether polyol as derived by a condensation between a polyhydric alcohol and a polyhydric carboxylic acid is used as a polyol, there occurs the problem that the resultant polyurethane foam becomes larger in brittleness as compared to a polyurethane foam as foamed with CFC-11 or HCFC-141b, which results in the deterioration of adhesive properties between a face material and the same. Furthermore, when an HFC is used as a foaming agent, earth-warming and cost problems will be occur. Therefore, the HFC is infrequently used by itself as a foaming agent, while the HFC as a foaming agent is often used together with water. Even in this case, there occurs the problem that the resultant polyurethane foam becomes larger in brittleness, which results in the deterioration of adhesive properties between a face material and the polyurethane foam, in a similar manner to when merely water is used as a foaming agent.

Generally, when a rigid polyurethane foam is prepared by using water as a foaming agent, a foam will be formed from a carbon-dioxide gas as generated through a reaction between water and isocyanate group. This reaction will simultaneously produce urea group. Urea group is high in cohesive force, and thus it has the advantage of consolidating the resultant polyurethane foam, while it has the disadvantage of making the polyurethane foam embrittled, in particular the surface layer of the polyurethane foam. When the surface layer is embrittled, the adhesive properties between a structural material (for example, a face material), such as a steel plate, lumber or paper, and the surface layer is remarkably impaired. The more highly the loads of water are increased, the larger this tendency becomes. Therefore, a rigid polyurethane foam as foamed with water has been the problem that it would be difficult to lower the density of the polyurethane foam by increasing the amount of added water. Furthermore, even when an HFC is used as a foaming agent, there is a similar problem to when water is used by itself as a foaming agent, since water as a foaming agent is commonly used together therewith.

As a method for improving the brittleness and the adhesive properties of the surface of a rigid polyurethane foam, for example, a method wherein an imidazole catalyst is used is proposed (for example, refer to JP-A-9-87351). However, the proposal has the disadvantage the addition of the imidazole catalyst leads to the acceleration of the whole reactions for the polyurethane foam, and thus it is difficult to control the properties of the derived polyurethane foam by adjusting the composition of the catalyst. Furthermore, a method wherein a solvent showing no reaction to an organic polyisocyanate and a polyol is used is also known. However, the use of a solvent has the disadvantage that it softens the whole polyurethane foam, which leads to the decrease of the strength of the polyurethane foam, or leads to the volatilization or elution of the solvent from the polyurethane foam.

### SUMMARY OF THE INVENTION

An object of the present invention is to provide a composition for producing a rigid polyurethane foam having improved brittleness and excellent adhesive properties to a face material, when water is used by itself as a foaming agent, or when water is used together with an HFC as a foaming agent; and a method of preparing the same.

In order to solve the above-mentioned problems, the present inventors have been devoted to studying. As a result, it has been found that the use of basic ingredients comprising an organic polyisocyanate and/or a polyol as raw materials for producing a rigid polyurethane foam, water or a mixture of water and an HFC as a foaming agent, a catalyst, and a foam stabilizer, as well as a compound as a modifying agent, having a saturated bond and carbonyl group which are adjacent to each other, in an amount of 0.01 to 20 parts by weight per 100 parts by weight of said polyol, is effective to lower the brittleness of the rigid polyurethane foam and to improve the adhesive properties, whereby the present invention has been achieved. The mechanism of the decrease in brittleness will be that a low molecular weight compound (a) having a saturated bond and carbonyl group which are adjacent to each other is reacted with a primary amine as produced by a reaction between water and isocyanate group so as to produce a secondary amino group, followed by the reaction of the secondary amino group with another isocyanate group. In case of common foaming with water, urea group is produced, while in case of using said low molecular weight compound (a) as a modifying agent, a bonding wherein one of hydrogen atoms of urea group is substituted with a molecule of the modifying agent is formed. This substituted urea-bond prevents the excessive agglomeration of urea bond. According to this effect, the brittleness of the urethane foam is decreased, whereby the adhesive properties to a face material can be improved.

That is, the present invention can be described by the following (1) to (5):
(1) A composition for forming a rigid polyurethane foam, comprising an organic polyisocyanate, a polyol, a catalyst, a foam stabilizer, water as a foaming agent, a low molecular weight compound (a) having an unsaturated bond and carbonyl group which are adjacent to each other in an amount of 0.01 to 20 parts by weight per 100 parts by weight of said polyol, as a modifying agent, and if necessary, other auxiliary agent(s).
(2) A composition for forming a rigid polyurethane foam, characterized in that a composition comprising an organic polyisocyanate, a polyol, a catalyst, a foam stabilizer, water and a hydrochlorofluorocarbon as a foaming agent, a low molecular weight compound (a) having an unsaturated bond and carbonyl group which are adjacent to each other in an amount of 0.01 to 20 parts by weight per 100 parts by weight of said polyol, as a modifying agent, and if necessary, other auxiliary agent(s);
(3) A composition for forming a rigid polyurethane foam according to the item (1) or (2), wherein the number average molecular weight of said low molecular weight compound (a) is less than 500;
(4) A composition for forming a rigid polyurethane foam according to any one of the items (1) to (3), wherein said low molecular weight compound (a) is a maleic acid ester; and
(5) A method of preparing a rigid polyurethane foam, characterized by using a composition for forming a rigid polyurethane foam according to any one of the items (1) to (4).

### DETAILED DESCRIPTION OF THE INVENTION

The present invention will be further particularly described.

The loads of a low molecular weight compound (a), having an unsaturated bond and carbonyl group which are adjacent to each other, which is used as a modifying agent in the present invention, are preferably 0.01 to 20 parts by weight per 100 parts by weight of a polyol, and more preferably 0.1 to 15 parts by weight. When the loads are less than 0.01 parts by weight, the effect on lowering the brittleness of a rigid polyurethane foam which is foamed with water is small, and thus excellent additive properties can not be manifested. On the other hand, when the loads are more than 20 parts by weight, there may occur the problem that it may give rise to the deterioration in dimensional stability due to the action of the modifying agent remaining within the polyurethane foam.

As said low molecular weight compound (a), the one which is excellent in compatibility with a polyol, and low in viscosity is preferred, such as maleic acid, maleic ester, fumaric acid, fumaric ester, acrylic acid, acrylate, methacrylic acid, methacrylate, itaconic acid, itaconate, acrolein, metacrolein, crotonic acid, benzoquinone, or isophorone. From such a point of view, various low molecular weight compounds can be used, provided that the number average molecular weight is less than 500. Among them, a carboxylic ester is preferably used, and in particular a dibasic lower-alcohol ester (having carbon atoms of 8 or less) is preferably used. Furthermore, in terms of the rate of reaction to a primary amine, the velocity, the compatibility with an organic isocyanate or a polyol, the odor, the safety, the cost and the like, among them, maleic ester is most preferably used.

Besides, as the low molecular weight compound (a), the one having an unsaturated bond and carbonyl group which are adjacent to each other, as well as an active hydrogen group such as hydroxyl group, or isocyanate group can be used. In this case, the low molecular weight compound (a) participates in a reaction for producing urea group as well as in the formation of a bridge structure.

As organic polyisocyanates in the present invention, publicly known various polyfunctional aliphatic, alicyclic and aromatic isocyanates can be used, and for example, hexamethylene diisocyanate (HDI), isophorone diisocyanate (IPDI), 4,4-dichlorohexylmethane diisocyanate (H12MDI), tolylene diisocyanate (TDI), a crude tolylene diisocyanate, a denatured tolylene-diisocyanate, 4,4'-diphenylmethane diisocyanate (4,4' -MDI), a polymeric MDI (which is referred to as a crude diphenylmethane diisocyanate, a crude MDI, or the like; and may be hereinafter abbreviated as "a p-MDI"), a denatured diphenylmethane diisocyanate (such as the one denatured with carbodiimide or a prepolymer), ortho-toluidine diisocyanate (TODI), naphthylene diisocyanate (NDI), xylene diisocyanate (XDI), lysine diisocyanate (LDI), and the like can be enumerated. In the present invention, in terms of the mechanical and physical properties and the cost of the derived rigid polyurethane foam, a p-MDI which is a mixture of 2,4'-diphenylmethane diisocyanate (2,4' -MDI), 2,2'-diphenylmethane diisocyanate (2,2'-MDI), 4,4' -MDI , and a polymethylenepolyphenylene polyisocyanate having three or more benzene-rings; or a mixture of a p-MDI and other isocyanate component (s); is preferably used. Among them, a p-MDI comprising of 2,4'-MDI and 2,2'-MDI in an amount of 0 to 30% by weight in the total ratio, 25 to 70% by weight of said diphenylmethane diisocyanate (2,4' -MDI, 2,2'-MDI and 4,4'-MDI), and 35 to 75% by weight of said polymethylenepolyphenylene polyisocyanate having three or more benzene-rings is particularly preferred.

As a polyol capable of reacting with isocyanate group, that is, as an active-hydrogen compound having two or more of functional group containing active-hydrogen, any publicly known compound which is a compound having two or more of functional group containing active-hydrogen, such as hydroxyl group and/or amino group, or a mixture of two or more of such compounds can be used. In the present invention, in terms of the mechanical and physical properties of the derived rigid polyurethane foam, a compound having two or more of hydroxyl group, or a mixture of such compounds, or a mixture of such a compound as a main component and a polyamine or the like is preferably used, provided that when a low molecular weight compound (a) having an unsaturated bond and carbonyl group which are adjacent to each other is premixed therewith for use, a compound having a primary amino group capable of reacting with the compound (a) can not be used.

As the above-mentioned compound having two or more of hydroxyl group, a polyether polyol, a polyester polyol, a polyhydric alcohol, a diethylene polymer containing hydroxyl group and the like can be enumerated. Among others, a blend of merely one or more polyether-polyols, or a mixture of the blend as a main component and a polyester polyol, a polyhydric alcohol, a polyamine, alkanolamine and/or other active-hydrogen compound is preferably used. As the polyether polyol, a polyether polyol which is derived by adding a cyclic ether, in particular, an alkylene oxide such as propylene oxide or ethylene oxide, to a polyhydric alcohol, a saccharide, alkylamine, alkanolamine, and/or other initiator(s) is preferred. Furthermore, as the polyol, a polyol composition in which a vinyl polymer in the form of fine particles is dispersed in a polyether polyol which is referred to as "polymer polyol" or "graft polyol" can also be used. As the polyester polyols, a polyol as derived by the condensation of a polyhydric alcohol and a polyhydric carboxylic acid, and a polyol as derived by the ring-opening polymerization of a cyclic ester can be enumerated. As the polyhydric alcohol, ethylene glycol, propylene glycol, diethylene glycol, dipropylene glycol, glycerin, trimethylolpropane, pentaerythritol, diethanolamine, triethanolamine, and the like can be enumerated. As the polyhydric carboxylic acids, phthalic anhydride, terephthalic acid, dimethyl terephthalic acid, adipic acid, HET acid, and the like can be enumerated.

A polyol used in the present invention is selected from polyols having a hydroxyl value of 15 to 2000 (mg KOH/g), depending upon the application of a derived rigid polyurethane foam, that is, the required physical properties.

As the commercially available polyols, a polyether polyol as derived by adding propylene oxide to sucrose (for example, "GR-35" with a hydroxyl value of 400 (mg KOH/g): made by Takeda Chemical Industries, Ltd.), a polyether polyol as derived by adding propylene oxide to toluenediamine (for example, "NT-400" with a hydroxyl value of 400 (mg KOH/g) : made by Mitsui Chemicals, Inc.), and a polyether polyol as derived by adding propylene oxide and ethylene oxide to glycerin (for example, "FA-103T" with a hydroxyl value of 50 (mg KOH/g): made by Sanyo Chemical Industries, Ltd.) can be exemplified. As the additional polyol, "EX-425R" with a hydroxyl value of 420 (mg KOH/g), made by Asahi Glass Co., Ltd., which is derived by adding propylene oxide to sucrose and triethylenediamine, can be enumerated.

In the present invention, when a polyol is reacted with an organic polyisocyanate, the use of a catalyst is required in order to accelerate the reaction. As the catalysts, a metallic-compound catalyst such as an organotin compound, which accelerates the reaction between an active-hydrogen-containing group in the polyol and isocyanate group in the organic polyisocyanate; and a tertiary-amine catalyst such as triethylenediamine (TEDA),
tetramethylhexamethylenediamine (TMHMDA),
pentamethyldiethylenetriamine (PMDETA), dimethylcyclohexylamine (DMCHA), or bis(dimethylamino)ethylether (BDMAEA); are used. Furthermore, a trimerization catalyst which reacts said isocyanate groups with each other also is used, depending on the objective.

In the present invention, in order to form a satisfactory foam, the use of a foam stabilizer is required. As the foam stabilizers, any foam stabilizer which is publicly known as a foam stabilizer in the field of polyurethane industries may be used. For example, a silicone foam-stabilizer, and fluorine-contained compound foam-stabilizer may be used.

In the present invention, if necessary, additionally, as auxiliary agents, for example, a bulking agent, a stabilizer, a coloring agent and/or a flame retardant can be used. A typical flame retardant is tris(chloropropyl)phosphate (TCPP).

According to the present invention, these raw materials can be used so as to derive a polyurethane foam, an urethane-modified polyisocyanurate foam, and other foamed synthetic resins. The present invention is specially effective to produce a rigid polyurethane foam, an urethane-modified polyisocyanurate foam, and other rigid foams. Among others, it is in particular effective to produce a rigid polyurethane foam as foamed with water, or with both water and an HFC, which can be derived by using a polyol having a hydroxyl value of about 40 to 900 (mg KOH/g) or a mixture of such polyols, and an aromatic polyisocyanate compound.

The low molecular weight compound (a) will not react with an amine catalyst, and furthermore, the addition of the amine catalyst little affects the rate of reaction in a foam production, such as cream time or gel time. Therefore, even if any amount of the low molecular weight compound (a) is added thereto, it is not necessary to consider the modification and the like of the amount of the catalyst. However, the tack-free time tends to be somewhat delayed. This is, because the effect of the surface of the product being decreased in brittleness is manifested. Besides, a rigid polyurethane foam is generally derived by mixing two liquids of a polyol-containing premix molding composition (i. e., a polyol premix) and an organic-polyisocyanate-containing premix molding composition (or an organic polyisocyanate alone) at the time of molding, or by mixing three or more liquids of both said premix molding compositions and the low molecular weight compound (a) at the time of molding, although the low molecular weight compound (a) may have been added to the polyol-containing premix molding composition, or the organic-polyisocyanate-containing premix molding composition (or the organic polyisocyanate alone) previously so as to provide its effect to lower the velocity of the mixed liquor and to improve the compatibility of the liquor.

The low molecular weight compound (a) will quickly react with a primary amino group, while will not react with hydroxyl group in a polyol, and isocyanate group in an organic-polyisocyanate, and thus it can also have been added to a polyol-containing premix molding composition, or an organic-polyisocyanate-containing premix molding composition (or an organic polyisocyanate alone) previously. Furthermore, the low molecular weight compound (a) may be mixed with a raw material at the time of preparing a rigid urethane foam with mixing either of the premix molding compositions so as to provide an effect similar thereto. Although the low molecular weight compound (a) will not react at all at the time of the addition to a raw material, as soon as isocyanate group reacts with water so as to produce a primary amino group, the low molecular weight compound (a) will react therewith so as to produce a secondary amino group. Subsequently, this secondary amino group will quickly react with another isocyanate group. Accordingly, the low molecular weight compound (a) will be incorporated into the molecular skeleton of a resin constituting an urethane foam, but it will not be evaporated or not eluted from the urethane foam. Since the low molecular weight compound (a) reacts with merely a primary amino group, it will not take part in a reaction between hydroxyl group and isocyanate group. Therefore, the low molecular weight compound (a) will take part in only urea group which gives rise of the deterioration of the adhesive properties of the urethane foam, and the effect is in particular brought out in the surface layer of the urethane foam. Thus it little affects the physical properties of the whole of the urethane foam.

### DESCRIPTION OF PREFERRED EMBODIMENTS

The present invention will be more specifically described on the basis of Examples, although the present invention should be interpreted without limiting to the following working examples only.

### Determination of Expansion Rate:

Raw materials as described in Table 1 were provided, and the blend and the like of a polyol premix and isocyanate components were prepared based upon a compounding ratio as described in Table 1. Each of these raw materials was controlled to a temperature of 20°C, and thereafter weighed out into a 2000 ml descup to the total weight of 500 g, followed by agitation with a disc impeller-mixer (at a revolution speed of 7000 rpm) for five seconds. After the agitation, the derived mixture was immediately injected into a top-face opening type of aluminum-mold having an internal dimension of 250 mm X 250 mm X 250 mm (height), which had been controlled to a temperature of 40°C previously, followed by the determination of the reaction rates (e.g., cream time, gel time, tack-free time, and rise time) of the free-foamed foam.

### Preparation of Panel-foamed Foam:

Raw materials as described in Table 1 were provided, and the blend and the like of a polyol premix and isocyanate components were prepared based upon a compounding ratio as described in Table 1. Each of these raw materials was controlled to a temperature of 20°C, and thereafter weighed out into a 2000 ml descup to the total weight of 500 g, followed by agitation with a disc impeller-mixer (at a revolution speed of 7000 rpm) for five seconds. After the agitation, the derived mixture was immediately injected into an aluminum mold having an internal dimension of 500 mm X 500 mm X 60 mm (thickness), which had been controlled to a temperature of 40°C previously, followed by removal from the mold after ten minutes so as to derive a panel-foamed foam. After the removal from the mold, the panel-foamed foam was still stood at room temperature for a period of 24 hours, followed by determination upon the following items:
Density of Panel-Foam : according to JIS A9511 (Unit in Table 1: kg/m³)
Brittleness : according to the following measuring method
Rate of Dimensional Change at Elevated Temperature : according to the following measuring method (Unit in Table 1: %)
Adhesive Strength : according to the following measuring method (Unit in Table 1: MPa)

### Brittleness:

A panel-foamed foam was molded, removed from the mold, and still stood at room temperature for a period of 24 hours, followed by functional evaluation on the side surface of the foam.
In Table 1, ○ : Good
Δ : Generally good
× : No good

### Rate of Dimensional Change at Elevated Temperature:

The panel-foamed foam was cut into a size of 50 mm X 50 mm X 50 mm. The rate of dimensional change of each of these cut foam-samples was determined.

### Adhesive Strength:

When a panel-foamed foam was molded, a previously degreased steel-plate (100 X 100 mm) had been fixed to the side surface, and the panel-foamed foam was formed in a similar manner to the one aforementioned. After removed from the mold, the panel-foamed foam was still stood at room temperature for a period of 24 hours, followed by the determination of an adhesive strength between the foam and the steel plate with a tensile tester (Tensilon).

### Example 1:

According to a compounding ratio as shown in Table 1, Polyether polyol A, water, a catalyst, a foam stabilizer, a flame retardant, and dibutyl maleate as a modifying additive agent were mixed so as to prepare a polyol premix. Subsequently, the premix and an organic polyisocyanate was mixed so as to provide a compounding ratio as shown in Table 1, followed by the determination of the expansion rate, the preparation of a panel-foamed foam, and the determination of the density of the panel-foam, the rate of the dimensional change at an elevated temperature, and the adhesive strength. The results are shown in Table 1.

### Examples 2 to 5, and Comparative Examples 1 and 2:

In a similar manner to the one in Example 1, as Examples 2 to 5 and Comparative Examples 1 and 2, the determination of the expansion rate, the preparation of a panel-foamed foam, and the determination of the density of the panel-foam, the rate of the dimensional change at an elevated temperature, and the adhesive strength were carried out based upon compounding ratios as shown in Table 1. The results are shown in Table 1.

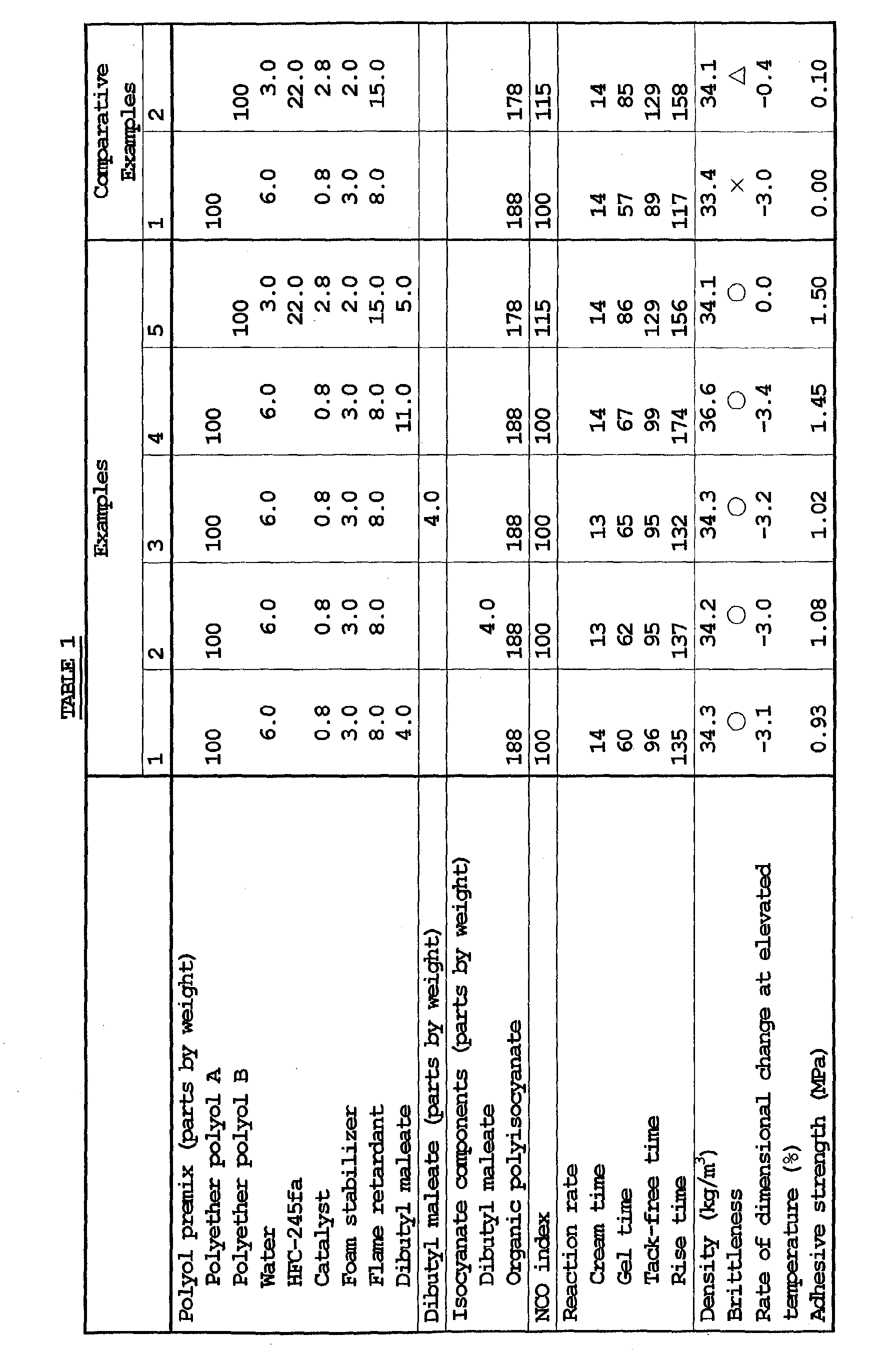

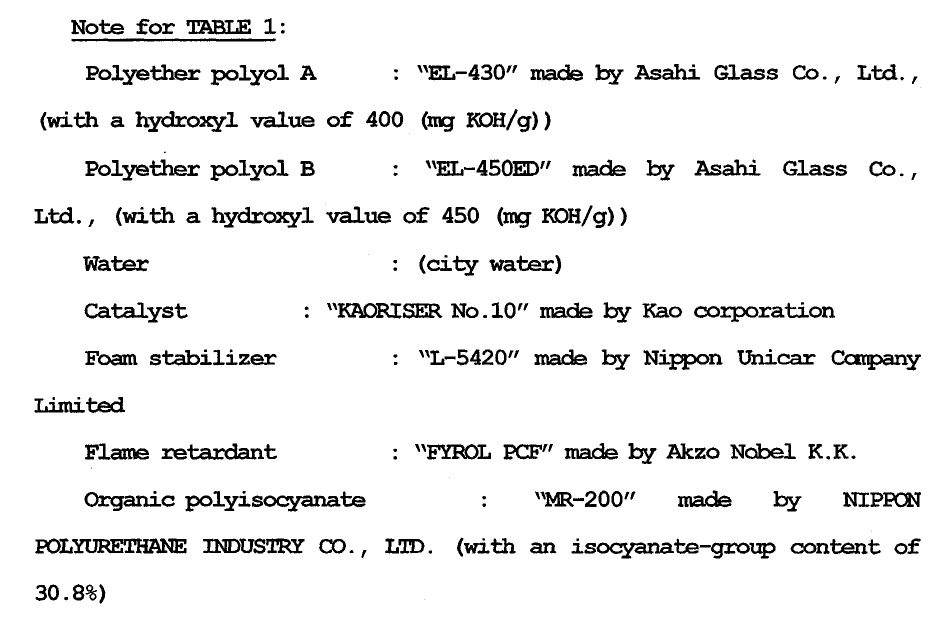

As shown by Examples 1 to 5 in Table 1, the use of a low molecular weight compound having an unsaturated bond and carbonyl group which are adjacent to each other, as a modifying agent could remarkably improve the brittleness and adhesive properties of a rigid polyurethane foam which was foamed with water, or with water and an HFC, without affecting the reactivity or dimensional stability of the polyurethane foam.

## Claims

1. A composition for forming a rigid polyurethane foam, comprising an organic polyisocyanate, a polyol, a catalyst, a foam stabilizer, water as a foaming agent, and a low molecular weight compound (a) having an unsaturated bond and carbonyl group which are adjacent to each other in an amount of 0.01 to 20 parts by weight per 100 parts by weight of said polyol, as a modifying agent, and, optionally, other auxiliary agent(s).

2. A composition according to claim 1, including also a hydrofluorocarbon or a hydrochlorofluorocarbon as a foaming agent.

3. A composition according to claim 1 or 2, wherein the number average molecular weight of said low molecular weight compound (a) is less than 500.

4. A composition for forming a rigid polyurethane foam according to claim 1, 2 or 3, wherein said low molecular weight compound (a) is a maleic acid ester.

5. A method of preparing a rigid polyurethane foam, **characterised by** using a composition for forming a rigid polyurethane foam according to any one of claims 1 to 4.
